(19) Europäisches Patentamt / European Patent Office / Office européen des brevets

(11) **EP 2 910 389 B1**

(12) **EUROPEAN PATENT SPECIFICATION**

(45) Date of publication and mention
of the grant of the patent:
**19.12.2018 Bulletin 2018/51**

(21) Application number: **13846653.7**

(22) Date of filing: **08.10.2013**

(51) Int Cl.:
**B60C 11/12** *(2006.01)*    **B60C 11/11** *(2006.01)*
**B60C 11/03** *(2006.01)*

(86) International application number:
**PCT/JP2013/077393**

(87) International publication number:
**WO 2014/061514 (24.04.2014 Gazette 2014/17)**

(54) **PNEUMATIC TIRE**

LUFTREIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.10.2012 JP 2012230193**

(43) Date of publication of application:
**26.08.2015 Bulletin 2015/35**

(73) Proprietor: **Bridgestone Corporation
Tokyo 104-8340 (JP)**

(72) Inventor: **MOMOZU, Masatoshi
Tokyo 104-8340 (JP)**

(74) Representative: **Oxley, Robin John George
Marks & Clerk LLP
90 Long Acre
London WC2E 9RA (GB)**

(56) References cited:
**EP-A1- 1 520 733        EP-A1- 2 287 016
WO-A1-2011/111394      JP-A- H03 143 707
JP-A- H04 365 608      JP-A- 2001 246 911
JP-A- 2001 246 911      JP-A- 2004 345 433
JP-A- 2006 151 222      JP-A- 2006 151 222
JP-A- 2006 256 516      JP-A- 2008 213 673
JP-A- 2010 221 967      JP-A- 2010 221 967**

EP 2 910 389 B1

Printed by Jouve, 75001 PARIS (FR)

**Description**

Technical Field

The present invention relates to a pneumatic tire with a sipe (a fine groove) formed inside a block.

Background Art

Pneumatic tires exist in which a sipe (a fine groove) is formed in a block partitioned by plural circumferential direction grooves extending along a tire circumferential direction and plural lug grooves extending diagonally with respect to the tire circumferential direction, thereby dividing the block. This type of pneumatic tire includes, in International Publication (WO) 2011/111394, a tire provided with what is referred to an arrow shaped block, in which, from out of the wall faces at the lug groove sides of the block, one wall face forms a protruding shape at a tire circumferential direction side, and the other wall face forms a indented shape at a tire circumferential direction side.
Reference is also made to JP 2006 151222 which discloses a pneumatic tire according to the preamble of Claim 1.
However, it cannot be said yet that driving performance on ice is sufficient, and a pneumatic tire with improved driving performance on ice is desired.

SUMMARY OF INVENTION

Technical Problem

In consideration of the above circumstances, an object of the present invention is to provide a pneumatic tire with improved driving performance on ice.

Solution to Problem

In a pneumatic tire according to a first aspect of the present invention, a plurality of blocks are partitioned from one another by plural circumferential direction grooves extending along a tire circumferential direction and by plural lug grooves extending diagonally with respect to the tire circumferential direction so that a plurality of blocks are provided in the tire circumferential direction with the lug grooves interposed in between, and a plurality of blocks are provided in the tire axial direction with the circumferential direction grooves interposed in between. Edges of wall faces on the lug groove sides of the block thereby catch on an icy road, enabling driving performance on ice to be secured. The block is also formed with an inclined fine groove that extends diagonally with respect to the tire circumferential direction, that is provided with two or more bend portions inside a single block, and that divides the block. Edges of the block divided by the inclined fine groove thereby catch on an icy road, enabling driving performance on ice to be improved.
Two or more bend portions are also formed to each lug groove. The wall faces at the lug groove sides of the block thereby form a protruding and indented shape. Namely, apex portions of protruding shape are formed along the tire circumferential direction, and corner portions of indented shape are formed along the tire circumferential direction. The apex portions and the corner portions are less liable to tilt over when the block kicks off from a road surface due to increased ground contact pressure with respect to the road surface, thereby enabling the catching effect on an icy road to be increased. The inclined fine grooves extend parallel to the lug grooves, linking together circumferential direction grooves.
The pneumatic tire also includes two or more circumferential direction fine grooves extending along the tire circumferential direction inside the block), so as to partition the block, wherein the circumferential direction fine grooves are disposed so as to intersect with bend portions of the inclined fine groove, the bend portions intersected by the circumferential direction fine grooves being adjacent to each other along a tire axial direction within the block. Meltwater between the block and the road surface thereby enters the inclined fine groove and the circumferential direction fine groove, and is discharged into the circumferential direction grooves and the lug grooves. This enables water discharge efficiency to be increased and anti-hydroplaning performance to be improved compared to a block in which only an inclined fine groove is formed.
In a pneumatic tire according to a second aspect of the present invention, the circumferential direction fine groove is formed with a shallower groove depth than that of the inclined fine groove. The block is thereby less liable to tilt over during kick-off compared to a case in which the groove depth of the circumferential direction fine groove and the groove depth of the inclined fine groove are the same depth, thus enabling a reduction in the ground contact surface area to be suppressed.
In a pneumatic tire according to a third aspect of the present invention, the circumferential direction fine groove is formed between the bend portions of the lug grooves adjacent to each other in the tire circumferential direction, and the circumferential direction fine groove thereby links together the bend portions, where meltwater is liable to collect, enabling water discharge performance to be improved.

In a pneumatic tire according to a fourth aspect of the present invention, at least a portion of the inclined fine groove extends in a zigzag shape in a block plan view and is a 3-dimensional sipe that folds in the depth direction of the inclined fine groove. Forming the inclined fine groove with a 3-dimensional profile enables the rigidity of the block to be increased. The block is thereby less liable to tilt over, enabling a reduction in the ground contact surface area to be suppressed.

In a pneumatic tire according to a fifth aspect of the present invention, at least one end portion of the circumferential direction fine groove has a terminal end inside the block. One portion of the block is thereby linked without being divided by the circumferential direction fine groove, enabling the rigidity of the block to be increased compared to a case in which the block is divided.

In a pneumatic tire according to a sixth aspect of the present invention, the lug grooves comprise an even number of the bend portions, such that the block does not have any directionality. The rotation direction when mounting the tire to a vehicle therefore does not need to be specified, thereby facilitating tire rotation.

In a pneumatic tire according to a seventh aspect of the present invention, the bend portions of the lug grooves are provided at regular intervals between the circumferential direction grooves, and
a number N of the bend portions of the lug grooves satisfies equation $W/L \geq N-1$, wherein W is a lateral width of the block in a tire axial direction and L is a circumferential width of the block in the tire circumferential direction.

Setting the number of bend portions to satisfy the above equation enables a reduction in the rigidity of the apex portions to be suppressed, without reducing the lateral width of the apex portions of the block. Namely, in a case in which the lateral width W of a block is double the circumferential width L, for example, by setting the number N of the bend portions to three or less, rigidity can be secured without reducing the lateral width of the apex portions. Advantageous Effects of Invention

With the above configuration, the present invention enables provision of a pneumatic tire with improved driving performance on ice.

BRIEF DESCRIPTION OF DRAWINGS

Fig. 1 is an opened-out view illustrating a portion of a tread section of a pneumatic tire according to a first, reference embodiment, which is not according to the present invention.
Fig. 2 is an enlarged view of relevant portions, illustrating a state in which a block according to the first reference embodiment is subject to force from a road surface.

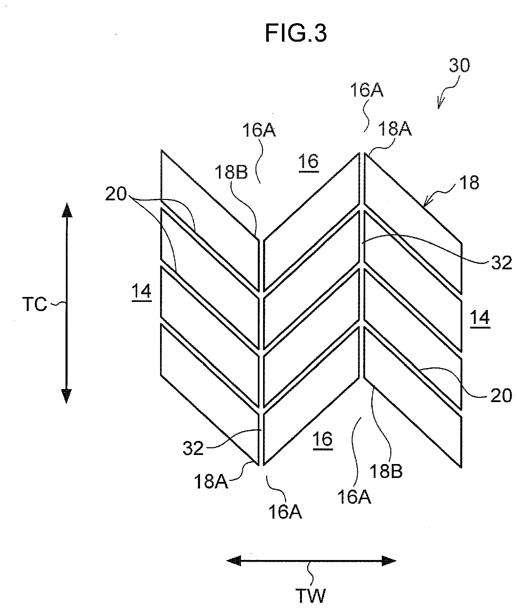

Fig. 3 is an enlarged view of relevant portions, illustrating a block according to a second, exemplary embodiment, which is according to the present invention.
Fig. 4 is an enlarged view of relevant portions, illustrating a block according to a third, reference embodiment, which is not according to the present invention.
Fig. 5 is an enlarged view of relevant portions, illustrating a block according to a fourth, reference embodiment, which is not according to the present invention.
Fig. 6 is an enlarged view of relevant portions, illustrating a block according to a fifth, reference embodiment, which is not according to the present invention.
Fig. 7 is an enlarged view of relevant portions, illustrating a block according to a sixth, reference embodiment, which is not according to the present invention.
Fig. 8 is an enlarged view of relevant portions, illustrating a block according to a seventh, reference embodiment, which is not according to the present invention.
Fig. 9 is a perspective view of a cross-section of a block taken along the depth direction, illustrating a 3-dimensional sipe according to the seventh reference embodiment, which is not according to the present invention.
Fig. 10 is an opened-out view illustrating a portion of a tread section of a pneumatic tire according to an eighth, exemplary embodiment, which is according to the present invention.
Fig. 11 is an opened-out view illustrating a tread section of a conventional pneumatic tire.

## DESCRIPTION OF EMBODIMENTS

First Reference Embodiment

Tire Configuration

Explanation follows regarding a pneumatic tire 10 (hereafter referred to as a tire 10) according to a first, reference embodiment, which is not according to the present invention, with reference to the drawings. Note that in the drawings, the arrow TW indicates the axial direction of the tire 10 (the tire axial direction), and the arrow TC indicates the circumferential direction of the tire 10 (the tire circumferential direction). The tire axial direction referred to herein indicates a direction parallel to a rotation axis of the tire 10, and is also referred to as the tire width direction. The tire circumferential direction refers to the direction in which the tire 10 rotates about the rotation axis of the tire 10. Internal configuration of the tire 10 is similar to that of pneumatic tires in general, and so explanation is omitted.

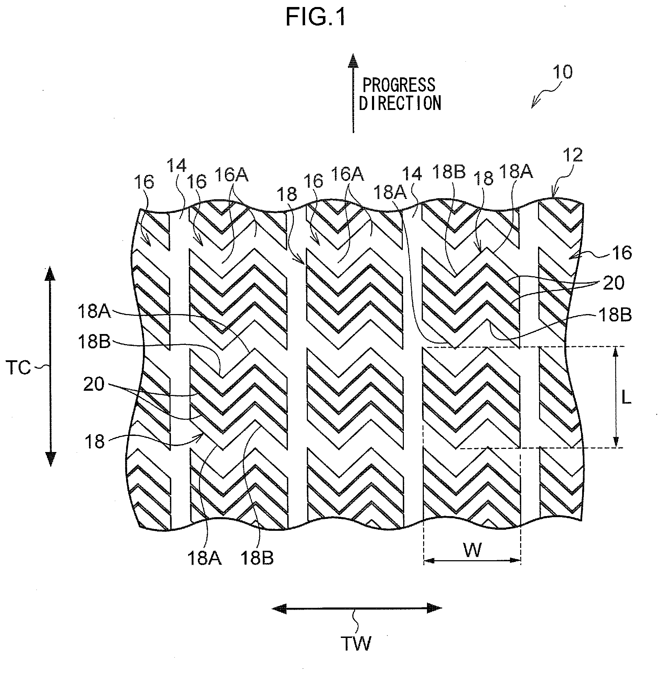

As illustrated in Fig. 1, plural circumferential direction grooves 14 extending along the tire circumferential direction are formed to a tread section 12 of the tire 10. The circumferential direction grooves 14 are provided at intervals in the tire axial direction. The circumferential direction grooves 14 are formed at regular intervals in the tire axial direction in the present reference embodiment as an example; however configuration is not limited thereto, and the circumferential direction grooves 14 may be formed at irregular intervals.

Lug grooves 16 are provided extending diagonally with respect to the tire circumferential direction, between the circumferential direction grooves 14 that are adjacent to each other in the tire axial direction. The lug grooves 16 are formed parallel to each other at intervals in the tire circumferential direction, and adjacent circumferential direction grooves 14 are linked together by the lug grooves 16.

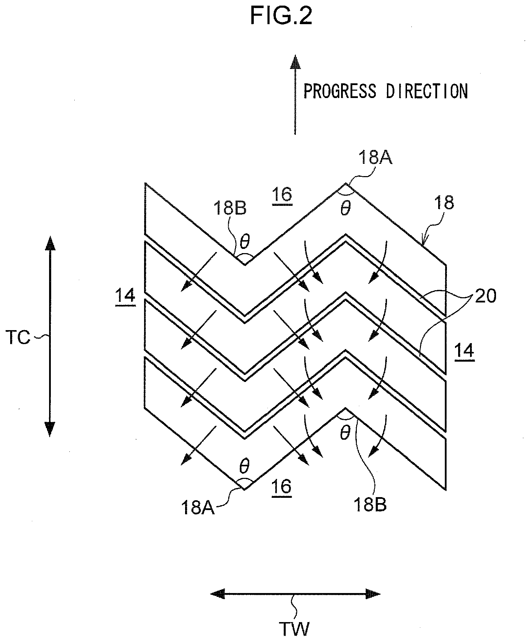

Each of the lug grooves 16 bends at two locations. Namely, two bend portions 16A are formed between each of the adjacent circumferential direction grooves 14. The bend portions 16A are formed at regular intervals between the circumferential direction grooves 14 in the present reference embodiment as an example; however configuration is not limited thereto, and the intervals may be irregular, as long as two or more bend portions 16A are formed. Bend angles θ at each of the bend portions 16A are formed as the same angle (see Fig. 2). Note that the bend portion referred to herein is not limited to a portion with a corner such as the lug groove 16 of the present reference embodiment, and also includes portions with a smooth curve.

The direction of each lug groove 16 from the circumferential direction groove 14 on the left side toward the circumferential direction groove 14 on the right side extends in sequence toward the diagonal lower right, the diagonal upper right, and the diagonal lower right, with the bend portions 16A interposed in between. However, configuration is not limited thereto, and the lug groove 16 may be formed extending toward the diagonal upper right, the diagonal lower right, and the diagonal upper right in sequence from the left side, or a combination of these configurations may be applied.

Note that it is preferable to set a number N of the bend portions 16A to a value that satisfies equation (1) below, where W is the lateral width in the tire axial direction, and L is the circumferential width in the tire circumferential direction of a block 18. Note that the circumferential width L refers to a distance between straight lines extending along the tire axial direction, passing through apex portions 18A of the block 18.

$$W/L \geq N\text{-}1 \qquad\qquad (1)$$

In the present reference embodiment, the lateral width W and the circumferential width L of the block 18 are formed with the same dimensions, and so the left side of equation (1) equals 1. It is therefore preferable to set the number N of the bend portions 16A to a value of 2 or less. This is to prevent a possibility of reduced rigidity of the apex portions 18A of the block 18, described later, that would arise if the number of the bend portions 16A was 3 or more, such that the bend angle θ was reduced, and the bend portions 16A were sharply pointed.

In the tread section 12, the blocks 18 are partitioned by the circumferential direction grooves 14 and the lug grooves 16. Plural of the blocks 18 are provided in the tire circumferential direction with the lug grooves 16 interposed in between, and the plural blocks 18 are provided in the tire axial direction with the circumferential direction grooves 14 interposed in between.

Wall faces at tire circumferential direction sides (the lug groove 16 sides) of each block 18 are formed in protruding and indented shapes running along the lug grooves 16, with the apex portions 18A forming protruding shapes along the tire circumferential direction, and the corner portions 18B forming indented shapes along the tire circumferential direction, provided at both tire circumferential direction sides of the block 18. The block 18 accordingly has an overall external profile of two combined arrow shaped blocks facing opposite directions to each other.

Inclined sipes 20, serving as inclined fine grooves extending diagonally with respect to the tire circumferential direction, are also formed to the block 18. Note that sipe (fine groove) referred to herein indicates a groove with a groove width from 0.3 mm to 1.5 mm, that is narrower than the circumferential direction groove 14 and the lug groove 16.

The inclined sipes 20 extend parallel to the lug grooves 16, linking together the circumferential direction grooves 14. In the present reference embodiment, three of the inclined sipes 20 are provided inside each block 18 as an example. The respective inclined sipes 20 are formed at regular intervals in the tire circumferential direction, thus dividing the block 18, and the block 18 is divided into four equal portions by the inclined sipes 20. The inclined sipes 20 are formed with a similar groove depth to the groove depths of the circumferential direction grooves 14 and the lug grooves 16.

Operation

Explanation follows regarding operation of the tire 10 according to the present reference embodiment. Since the dynamic friction coefficient of ice is low, driving performance such as braking performance and steering performance is reduced for general vehicle tires when driving on a road surface covered with ice (an icy road). Since the lug grooves 16 partitioning the blocks 18 of the tire 10 of the present reference embodiment extend diagonally with respect to the tire circumferential direction, edges of the wall faces at the lug groove 16 sides of the block 18 catch on an icy road when the block 18 kicks off from the road surface, thereby enabling driving performance on ice to be secured. The inclined sipes 20 are also formed in the block 18 extending parallel to the lug grooves 16, such that edges of the block 18 divided by the inclined sipes 20 catch on the icy road, enabling driving performance on ice to be improved.

Since the rigidity of the block 18 is reduced when the block 18 is divided by the inclined sipes 20, there is a concern that the block 18 may tilt over on contact with the road surface, reducing the ground contact surface area. As illustrated in Fig. 2, in the tire 10 of the present reference embodiment, the block 18 contacting the road surface bears force from the road surface during kick-off, and deforms so as to tilt over in the direction of the arrows. Namely, in the right half of the block 18 in the drawing, a portion extending from the apex portion 18A toward the progress direction rear side deforms so as to tilt over toward a direction in which the angle θ of the apex portion 18A decreases. The apex portion 18A is thereby suppressed from tilting over, enabling the ground contact pressure of the apex portion 18A to be increased.

In the left half of the block 18 in the drawing, a portion extending from the corner portion 18B toward the progress direction front side deforms so as to tilt over toward a direction in which the angle θ of the apex portion 18A increases. The corner portion 18B is thereby suppressed from tilting over, and the ground contact pressure of the corner portion 18B is increased. Thus, when the blocks 18 are partitioned by the lug grooves 16 provided with two or more bend portions 16A in this manner, the ground contact pressure of the apex portions 18A and the corner portions 18B is increased, enabling a reduction in the ground contact surface area to be suppressed.

Moreover, the inclined sipes 20 of the present reference embodiment are formed at regular intervals in the tire circumferential direction, dividing the block 18 into four equal portions, such that rigidity inside the block 18 is less liable to vary, enabling localized wear to be suppressed. Furthermore, meltwater between the road surface and the block 18 enters the inclined sipes 20 and is discharged into the circumferential direction grooves 14, enabling occurrence of a water film to be suppressed.

Although all the blocks 18 have similar dimensions in the present reference embodiment, configuration is not limited thereto, and each of the blocks 18 may be formed with different dimensions. Although two bend portions 16A are formed to each of the lug grooves 16 in the present reference embodiment, configuration is not limited thereto, and more of the bend portions 16A may be formed. Three bend portions 16A may be formed, for example. However, by forming the bend portions 16A in an even number of locations as in the present reference embodiment, there is no directionality of the block 18, and so the rotation direction when mounting the tire to a vehicle does not need to be specified, thereby facilitating tire rotation.

Although three inclined sipes 20 are formed in the present reference embodiment, configuration is not limited thereto, and, in consideration of the rigidity of the block 18, the number of inclined sipes 20 therein may be increased to four or more, or the number of inclined sipes 20 may be reduced to two or less. Similar applies for a second reference embodiment to an eighth reference embodiment below.

Second, Exemplary Embodiment

Explanation follows regarding a tire 30 according to the second, exemplary embodiment, which is according to the present invention. Note that the same reference numerals are applied to similar configuration to that of the first exemplary embodiment, and explanation thereof is omitted. Circumferential direction sipes 32, serving as circumferential direction fine grooves extending parallel to circumferential direction grooves 14, are formed to a block 18. The circumferential direction sipes 32 are formed between bend portions 16A of lug grooves 16, and divide the block 18 by linking apex portions 18A and corner portions 18B of the block 18. The block 18 is thereby divided into 12 equal portions by inclined sipes 20 and the circumferential direction sipes 32.

The groove width of the circumferential direction sipes 32 is formed with a similar width to the groove width of the inclined sipes 20, and the groove depth of the circumferential direction sipes 32 is formed shallower than the groove depth of the inclined sipes 20. In the present exemplary embodiment, the groove depth is formed at approximately half the depth of the inclined sipes 20 as an example.

In the tire 30 of the present exemplary embodiment, meltwater between the road surface and the block 18 passes through the circumferential direction sipes 32 and is discharged into the lug grooves 16, or branches from the circumferential direction sipes 32 into the inclined sipes 20, and is discharged into the circumferential direction grooves 14. Forming the circumferential direction sipes 32 therefore promotes discharge of meltwater between the road surface and the block 18 and suppresses the occurrence of a water film, enabling the occurrence of a hydroplaning phenomenon to be suppressed (enhancing anti-hydroplaning performance).

Although the circumferential direction sipes 32 are formed between the bend portions 16A of the lug grooves 16 in the present exemplary embodiment, configuration is not limited thereto, and the circumferential direction sipes 32 may be formed at other portions. The number of circumferential direction sipes 32 may also be increased, as long as the rigidity of the block 18 is not reduced. In the present exemplary embodiment, the circumferential direction sipes 32 are formed between the bend portions 16A, where meltwater is most liable to collect, thereby increasing water discharge efficiency. One end portion or both end portions of the circumferential direction sipes 32 may have a terminal end inside the block 18. In such a case, a portion of the block 18 is linked together without being completely divided, thereby enabling a reduction in the rigidity of the block 18 to be suppressed.

In the present exemplary embodiment, the groove depth of the circumferential direction sipes 32 is formed shallower than the groove depth of the inclined sipes 20, such that the block 18 is not divided to its base, and a reduction in the rigidity of the block 18 is suppressed. However, configuration is not limited thereto, and the groove depth of the circumferential direction sipes 32 and the groove depth of the inclined sipes 20 may be formed with a similar depth, this being approximately half the groove depth of the circumferential direction grooves 14 and the lug grooves 16.

Third, Reference Embodiment

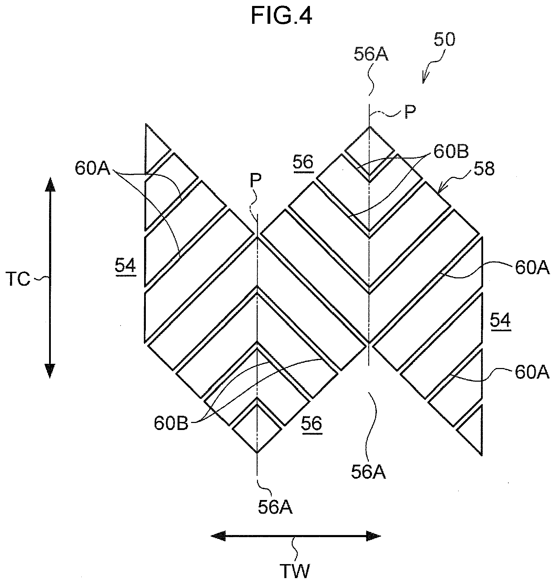

Explanation follows regarding a tire 50 according to the third reference embodiment, which is not according to the present invention. As illustrated in Fig. 4, the external profile of a block 58 formed to a tread section of the tire 50 of the present reference embodiment has a similar profile to the block 18 of the first reference embodiment and the block 18 of the second reference embodiment, and plural blocks 58 are formed along the tire circumferential direction and the tire axial direction.

Plural inclined sipes 60A, 60B are formed to the block 58 in a direction extending from a lug groove 56 and intersecting with a lug groove 56. The inclined sipes 60A are formed to both tire axial direction sides of the block 58 extending diagonally from the lower left toward the upper right in the drawing. Seven inclined sipes 60A are formed extending parallel to each other from bend portions 56A toward the tire axial direction outside. The inclined sipes 60B are formed to a tire axial direction center portion of the block 58, with seven inclined sipes 60B formed intersecting the inclined sipes 60A and extending parallel to each other from the upper left toward the lower right in the drawing. One end side of each inclined sipe 60B is connected to the respective inclined sipe 60A. Some of the inclined sipes 60A, 60B thereby form respective single inclined sipes that bend at a boundary of a hypothetical line P extending along the tire circumferential direction and passing through the bend portions 56A. The groove depth of the inclined sipes 60A, 60B is a similar depth to the groove depth of circumferential direction grooves 54 and the lug grooves 56.

In the tire 50 of the present reference embodiment, since the inclined sipes 60A, 60B extend from the lug grooves 56, discharge efficiency of meltwater collected in the lug grooves 56 can be improved compared to the tire 10 of the first reference embodiment, in which the inclined sipes 20 link the circumferential direction grooves 14 to each other. Note that the numbers of, and intervals between, the inclined sipes 60A, 60B are set in consideration of factors such as the rigidity required of the block 58 and water discharge performance, such that the rigidity of the block 58 is not reduced. Namely, the water discharge performance increases when the number of inclined sipes 60 is increased, and the rigidity of the block 58 increases when the number of the inclined sipes 60A, 60B is reduced.

Fourth Reference Embodiment

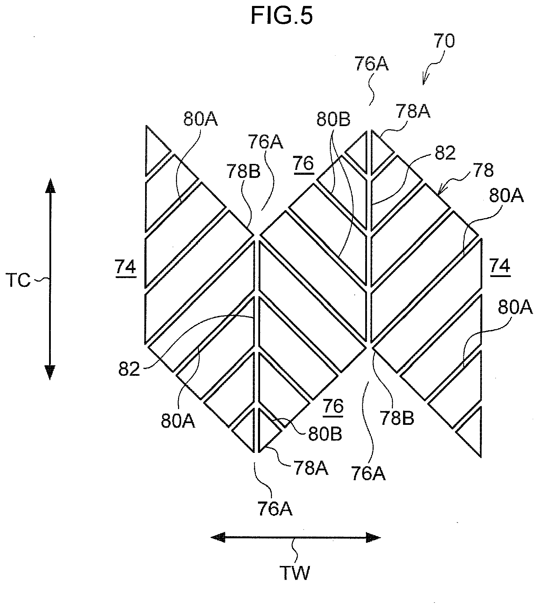

Explanation follows regarding a tire 70 according to the fourth reference embodiment, which is not according to the present invention. As illustrated in Fig. 5, a block 78 is formed to a tread section of the tire 70 of the present reference embodiment. The block 78 is partitioned by circumferential direction grooves 74 extending along the tire circumferential direction, and lug grooves 76 extending diagonally with respect to the tire circumferential direction. Two bend portions 76A are provided to each lug groove 76, and apex portions 78A and corner portions 78B are formed to each block 78.

Inclined sipes 80A, 80B are formed to the block 78 extending diagonally with respect to the tire circumferential direction. The groove depth of the inclined sipes 80A, 80B is a similar depth to the groove depth of the circumferential direction grooves 74 and the lug grooves 76. Seven inclined sipes 80A are formed extending parallel to each other at both tire axial direction sides of the block 78, and seven inclined sipes 80B are formed extending parallel to each other at a tire axial direction center portion of the block 78. The positioning and number of the inclined sipes are similar to the third reference embodiment.

Circumferential direction sipes 82 are formed to the block 78 extending along the tire circumferential direction. The circumferential direction sipes 82 are formed between the bend portions 76A of the lug grooves 76, and extend along the tire circumferential direction linking the apex portions 78A and the corner portions 78B of the block 78. The groove width of the circumferential direction sipes 82 is a similar width to the groove width of the inclined sipes 80A, 80B, and the groove depth of the circumferential direction sipes 82 is formed shallower than the groove depth of the inclined sipes 80A, 80B. The configuration is otherwise similar to the third reference embodiment.

In addition to the operation explained in the third reference embodiment, the tire 70 of the present reference embodiment enables anti-hydroplaning performance to be improved. Specifically, meltwater between the road surface and the block 78 enters the circumferential direction sipes 82 and is discharged into the lug grooves 76, or branches from the circumferential direction sipes 82 into the inclined sipes 80A, 80B and is discharged in the circumferential direction grooves 74 and the lug grooves 76. Discharge of meltwater between the road surface and the block 78 is thereby promoted and occurrence of a water film is suppressed, enabling anti-hydroplaning performance to be improved.

Fifth Reference Embodiment

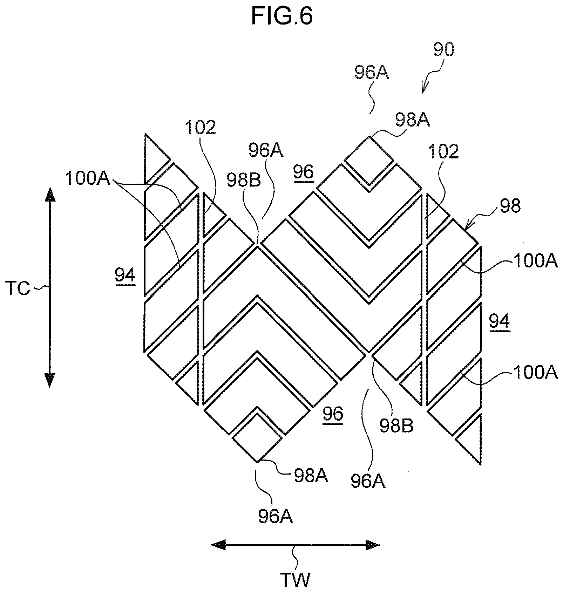

Explanation follows regarding a tire 90 according to the fifth reference embodiment, which is not according to the present invention. As illustrated in Fig. 6, the structure of a block 98 formed to a tread section of the tire 90 of the present reference embodiment is similar to the tire 70 of the fourth reference embodiment, with inclined sipes 100A, 100B, similar to the inclined sipes 80A, 80B of the fourth reference embodiment, formed to the block 98.

Circumferential direction sipes 102 formed to the block 98 are respectively formed between one circumferential direction groove 94 partitioning the block 98 and bend portions 96A, and the other circumferential direction groove 94 partitioning the block 98 and bend portions 96A. Namely, the circumferential direction sipes 102 are formed further toward the tire axial direction outside than the circumferential direction sipes 82 of the fourth reference embodiment. In the tire 90 of the present reference embodiment, the circumferential direction sipes 102 are separated from apex portions 98A and corner portions 98B, enabling the ground contact surface area of both the apex portions 98A and the corner portions 98B, at which the ground contact pressure is highest, to be secured, and water discharge performance to be improved. Operation is otherwise similar to the fourth reference embodiment.

Sixth Reference Embodiment

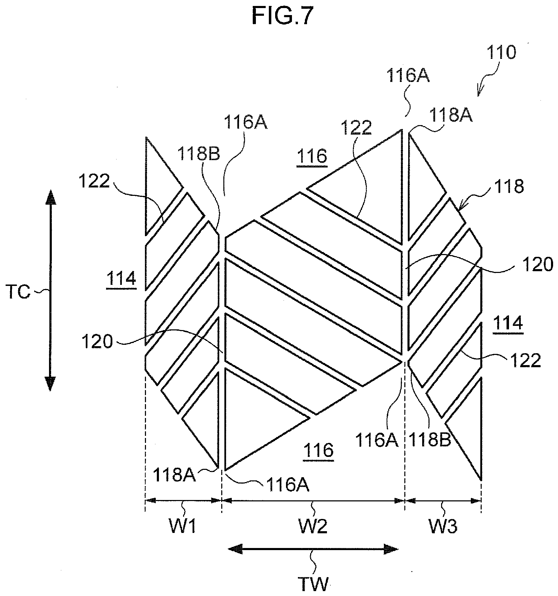

Explanation follows regarding a tire 110 according to the sixth reference embodiment, which is not according to the present invention. As illustrated in Fig. 7, a block 118 formed to a tread section of the tire 110 of the present reference embodiment differs from the blocks of the other reference embodiments in that bend portions 116A of lug grooves 116 partitioning the block 118 are not formed at regular intervals between circumferential direction grooves 114.

Specifically, the block 118 is partitioned by the circumferential direction grooves 114 extending along the tire circumferential direction and the lug grooves 116 extending diagonally with respect to the tire circumferential direction that are each provided with two bend portions 116A. A length W1 in the tire axial direction from the circumferential direction groove 114 partitioning the block 118 at the left side in the drawing to the nearest bend portion 116A is 1/2 the length of a length W2 in the tire axial direction between the bend portions 116A. A length W3 in the tire axial direction from the circumferential direction groove 114 at the right side in the drawing to the nearest bend portions 116A is a similar length to W1.

Two circumferential direction sipes 120 are formed to the block 118, extending along the tire circumferential direction. Each circumferential direction sipe 120 is formed between the bend portions 116A of the lug grooves 116, and divides up the block 118 by linking together an apex portion 118A and a corner portion 118B.

Five inclined sipes 122 extending diagonally with respect to the tire circumferential direction are formed to each portion of the block 118, divided by the circumferential direction sipes 120. The five respective inclined sipes 122 are formed parallel to each other at regular intervals. The inclined sipes 122 formed at both end portions in the tire axial direction of the block 118 extend diagonally from the lower left toward the upper right in the drawing, and the inclined sipes 122 formed at a center portion in the tire axial direction of the block 118 extend diagonally from the upper left toward the lower right in the drawing.

Seventh Reference Embodiment

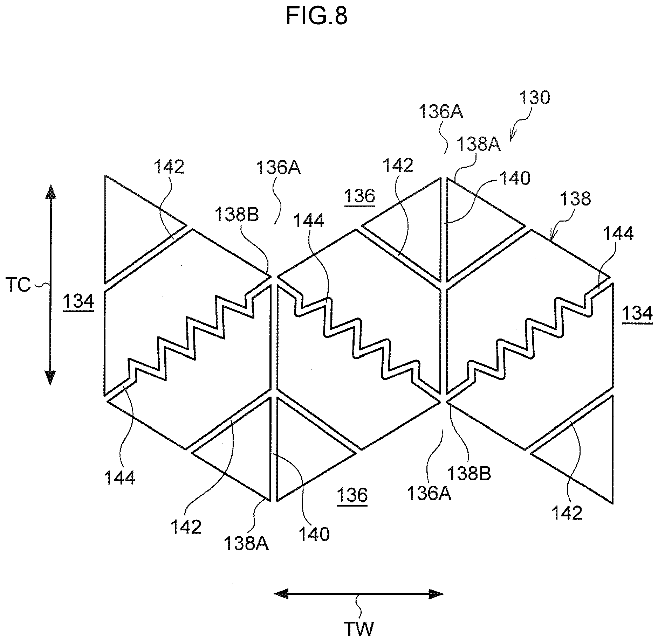

Explanation follows regarding a tire 130 of the seventh reference embodiment, which is not according to the present invention. As illustrated in Fig. 8, a block 138 is formed to a tread section 132 of the tire 130 of the present reference embodiment. The block 138 is partitioned by circumferential direction grooves 134 extending along the tire circumferential direction and Reference Example 4: A tire including the block 118 according to the sixth reference embodiment.

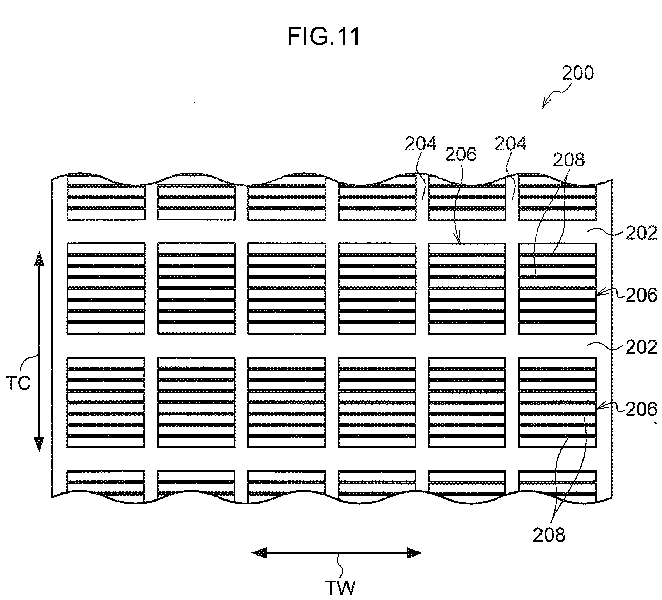

Reference Example 5: A tire including the block 138 according to the seventh reference embodiment.
Example 6: A tire including the block 158 according to the eighth, exemplary embodiment. Comparative Example: As illustrated in Fig. 11, the tire 200 has seven sipes 208 extending along the tire axial direction formed to each block 206, which is partitioned by lug grooves 202 extending along the tire axial direction and circumferential direction grooves 204 extending along the tire circumferential direction.

Examples

Example 1: A tire including the block 18 according to the second, exemplary embodiment.
Example 2: A tire including the block 78 according to the fourth reference embodiment.
Example 3: A tire including the block 98 according to the fifth reference embodiment.
Example 4: A tire including the block 118 according to the sixth reference embodiment.
Example 5: A tire including the block 138 according to the seventh reference embodiment.
Example 6: A tire including the block 158 according to the eighth, exemplary embodiment.

In order to confirm the advantageous effects of tires according to the present invention, a comparison was made of friction coefficients on ice of a total of seven types of tire, these being six types (Example 1, Example 2, Example 3, Example 4, Example 5, Example 6) of tire according to said six embodiments and a tire 200 of a Comparative Example (Fig. 11). Explanation follows regarding the example tires and the Comparative Example tire used in the test. Note that the tire size of all the tires used is 195/65R15.

Test contents: Each tire was assembled in a new state to a suitable rim as specified by JATMA (JATMA YEAR BOOK, 2012) and filled with air until reaching a suitable internal pressure specified by JATMA. Then, in a state of being pressed against a rotating drum of drum test equipment simulating an icy road and applied with a radial load of 528 kgf (5.18 kN), each tire was driven at 30 km/h, the stress acting on each tire was measured, and a friction coefficient was computed using the measured value. Table 1 is a summary of the test results. Note that in Table 1, the friction coefficient is indicated as an index with the Comparative Example set at 100, with a higher value index indicating a larger friction coefficient and a higher performance on ice.

Table 1

| | Comparative Example | Example 1 | Example 2 | Example 3 | Example 4 | Example 5 | Example 6 |
|---|---|---|---|---|---|---|---|
| Friction Coefficient (Index) | 100 | 105 | 110 | 108 | 108 | 120 | 130 |

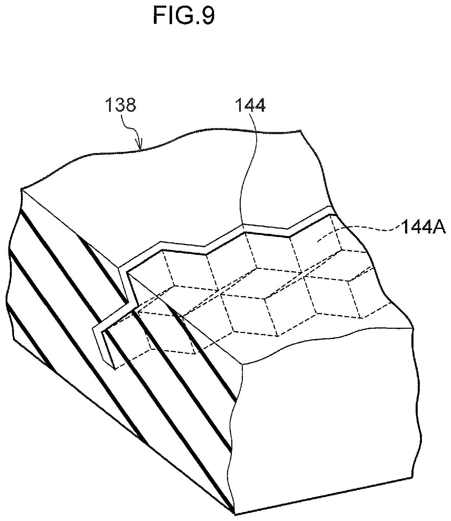

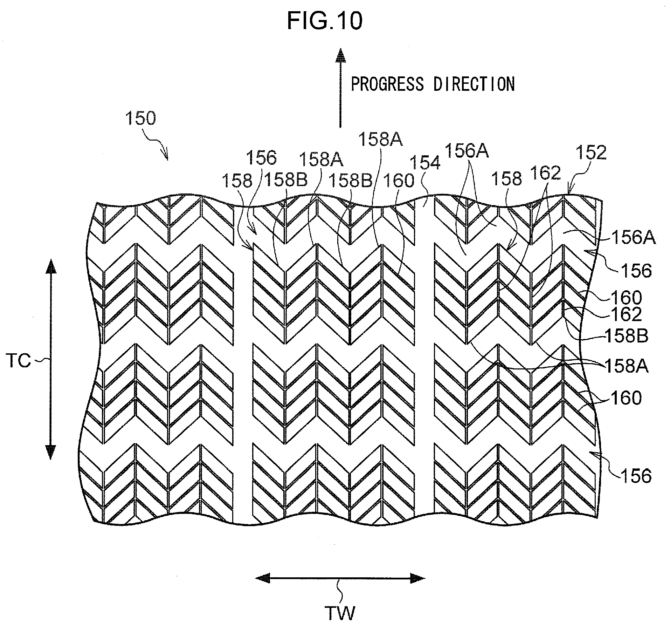

The test results in Table 1 can confirm that all the examples have a higher performance on ice than the Comparative Example. The test results can also confirm that the tire of Example 5 (the seventh reference embodiment) and the tire of Example 6 (the eighth, exemplary embodiment) have particularly high performance on ice. It is conceivable that, since the tire of Example 5 is formed with the 3-dimensional sipes 144 as illustrated in Fig. 9, the rigidity of the blocks 138 is increased and the blocks 138 are less liable to tilt over, thereby increasing the advantageous effect of catching on an icy road. It is also conceivable that, as illustrated in Fig. 10, the ground contact surface area of the tire of Example 6 has increased by the amount of increase in the lateral width in the tire axial direction of the blocks 158 compared to the other embodiments.

Although the second and eighth exemplary embodiments which are according to the present invention have been explained above, the present invention is not limited to these exemplary embodiments, and obviously various modifications may be implemented within a range not departing from the scope of the invention defined in the claims. For example, the blocks according to the first exemplary embodiment may be formed to part of, or all of, the tread section 12 of the tire 10 illustrated in Fig. 1.

Explanation of the Reference Numerals

| | |
|---|---|
| 10 | tire |
| 14 | circumferential direction groove |
| 16 | lug groove |
| 16A | bend portion |
| 18 | block |
| 20 | inclined sipe (inclined fine groove) |
| 32 | circumferential direction sipe (circumferential direction fine groove) |
| 144 | 3-dimensional sipe |
| L | circumferential width |
| W | lateral width |

**Claims**

1. A pneumatic tire (10), comprising:

    a plurality of blocks (18), which are partitioned from one another by a plurality of circumferential direction grooves (14) extending along a tire circumferential direction and by a plurality of lug grooves (16) extending diagonally with respect to the tire circumferential direction, so that a plurality of blocks (18) are provided in the tire circumferential direction with the lug grooves (16) interposed in between, and a plurality of blocks (18) are provided in the tire axial direction with the circumferential direction grooves (14) interposed in between, the lug grooves (16) being provided with two or more bend portions (16A); and
    a plurality of inclined fine grooves (20) that extend diagonally with respect to the tire circumferential direction, that are provided with two or more bend portions inside a single block (18), and that divide the block (18),
    **characterised in that**
    the inclined fine grooves (20) extend parallel to the lug grooves (16), linking together circumferential direction grooves (14), and
    the pneumatic tire (10) further comprises two or more circumferential direction fine grooves (32) extending along the tire circumferential direction inside the block (18), so as to partition the block,
    wherein the circumferential direction fine grooves (32) are disposed so as to intersect with said bend portions of the inclined fine grooves, the bend portions intersected by the circumferential direction fine grooves (32) being adjacent to each other along a tire axial direction within the block (18).

2. The pneumatic tire (10) of claim 1, wherein the circumferential direction fine grooves (32) are formed with a shallower groove depth than the inclined fine grooves (20).

3. The pneumatic tire (10) of claim 1 or claim 2, wherein the circumferential direction fine grooves (32) are formed between the bend portions (16A) of the lug grooves (16) that are adjacent to each other in the tire circumferential direction.

4. The pneumatic tire (10) of any one of claim 1 to claim 3, wherein at least a portion of the inclined fine grooves (20) extend in a zigzag shape in block (18) plan view and are three-dimensional sipes (144) that zigzag in a depth direction of the inclined fine grooves (20).

5. The pneumatic tire (10) of any one of claim 1 to claim 4, wherein at least one end portion of the circumferential direction fine grooves (32) has a terminal end inside the block (18).

6. The pneumatic tire (10) of any one of claim 1 to claim 5, wherein the lug grooves (16) comprise an even number of the bend portions (16A).

7. The pneumatic tire (10) of any one of claim 1 to claim 6, wherein:

the bend portions (16A) of the lug grooves (16) are provided at regular intervals between the circumferential direction grooves (14); and
a number N of the bend portions (16A) of the lug grooves (16) satisfies the equation W/L ≥ N-1,
wherein W is a lateral width of the block (18) in a tire axial direction and L is a circumferential width of the block (18) in the tire circumferential direction.

**Patentansprüche**

1.  Luftreifen (10), der Folgendes umfasst:

    eine Vielzahl von Blöcken (18), die durch eine Vielzahl von Umfangsrichtungsrillen (14), die sich entlang einer Reifenumfangsrichtung erstrecken, und durch eine Vielzahl von Stollenrillen (16), die sich diagonal in Bezug auf die Reifenumfangsrichtung erstrecken, voneinander getrennt sind, so dass eine Vielzahl von Blöcken (18) in der Reifenumfangsrichtung bereitgestellt wird, wobei die Stollenrillen (16) dazwischen eingefügt sind, und eine Vielzahl von Blöcken (18) in der Reifenaxialrichtung bereitgestellt wird, wobei die Umfangsrichtungsrillen (14) dazwischen eingefügt sind, wobei die Stollenrillen (16) mit zwei oder mehr gebogenen Abschnitten (16A) versehen sind, und
    eine Vielzahl von geneigten feinen Rillen (20), die sich diagonal in Bezug auf die Reifenumfangsrichtung erstrecken, die mit zwei oder mehr gebogenen Abschnitten innerhalb eines einzelnen Blocks (18) versehen sind und die den Block (18) teilen,
    **dadurch gekennzeichnet, dass**
    sich die geneigten feinen Rillen (20) parallel zu den Stollenrillen (16) erstrecken, wobei sie Umfangsrichtungsrillen (14) miteinander verbinden, und
    der Luftreifen (10) ferner zwei oder mehr feine Umfangsrichtungsrillen (32) umfasst, die sich entlang der Reifenumfangsrichtung innerhalb des Blocks (18) erstrecken, so dass sie den Block teilen,
    wobei die feinen Umfangsrichtungsrillen (32) so angeordnet sind, dass sie sich mit den gebogenen Abschnitten der geneigten feinen Rillen schneiden, wobei die durch die feinen Umfangsrichtungsrillen (32) geschnittenen gebogenen Abschnitte einander entlang einer Reifenaxialrichtung innerhalb des Blocks (18) benachbart sind.

2.  Luftreifen (10) nach Anspruch 1, wobei die feinen Umfangsrichtungsrillen (32) mit einer flacheren Rillentiefe geformt sind als die geneigten feinen Rillen (20).

3.  Luftreifen (10) nach Anspruch 1 oder Anspruch 2, wobei die feinen Umfangsrichtungsrillen (32) zwischen den gebogenen Abschnitten (16A) der Stollenrillen (16) geformt sind, die einander in der Reifenumfangsrichtung benachbart sind.

4.  Luftreifen (10) nach einem der Ansprüche 1 bis 3, wobei sich wenigstens ein Teil der geneigten feinen Rillen (20) in einer Zickzackform in einer Draufsicht des Blocks (18) erstreckt und dreidimensionale Lamellen (144) sind, die im Zickzack in einer Tiefenrichtung der geneigten feinen Rillen (20) verläuft.

5.  Luftreifen (10) nach einem der Ansprüche 1 bis 4, wobei wenigstens ein Teil der feinen Umfangsrichtungsrillen (32) ein Abschlussende innerhalb des Blocks (18) aufweist.

6.  Luftreifen (10) nach einem der Ansprüche 1 bis 5, wobei die Stollenrillen (16) eine gerade Anzahl der gebogenen Abschnitte (16A) umfassen.

7.  Luftreifen (10) nach einem der Ansprüche 1 bis 6, wobei:

    die gebogenen Abschnitte (16A) der Stollenrillen (16) in regelmäßigen Abständen zwischen den Umfangsrichtungsrillen (14) bereitgestellt werden und
    eine Anzahl N der gebogenen Abschnitte (16A) der Stollenrillen (16) die Gleichung W/L ≥ N-1 erfüllt,
    wobei W eine seitliche Breite des Blocks (18) in einer Reifenaxialrichtung ist und L eine Umfangsbreite des Blocks (18) in der Reifenumfangsrichtung ist.

**Revendications**

1. Bandage pneumatique (10), comprenant :

   plusieurs pavés (18) séparés les uns des autres par plusieurs rainures à direction circonférentielle (14) s'étendant le long d'une direction circonférentielle du bandage pneumatique, et par plusieurs rainures à barrettes (16) s'étendant de manière diagonale par rapport à la direction circonférentielle du bandage pneumatique, de sorte que plusieurs pavés (18) sont agencés dans la direction circonférentielle du bandage pneumatique, les rainures à barrettes (16) étant agencées entre eux, et plusieurs pavés (18) sont agencés dans la direction axiale du bandage pneumatique, les rainures à direction circonférentielle (14) étant agencées entre eux, les rainures à barrettes (16) comportant deux ou plusieurs parties fléchies (16A) ; et
   plusieurs fines rainures inclinées (20) s'étendant de manière diagonale par rapport à la direction circonférentielle du bandage pneumatique, comportant deux ou plusieurs parties fléchies à l'intérieur d'un seul pavé (18), et divisant le pavé (18) ;

   **caractérisé en ce que** :

   les fines rainures inclinées (20) s'étendent parallèlement aux rainures à barrettes (16), reliant les rainures à direction circonférentielle (14) ; et
   le bandage pneumatique (10) comprend en outre deux ou plusieurs fines rainures à direction circonférentielle (32) s'étendant le long de la direction circonférentielle du bandage pneumatique, à l'intérieur du pavé (18), de sorte à diviser le pavé ;
   dans lequel les fines rainures à direction circonférentielle (32) sont disposées de sorte à couper lesdites parties fléchies des fines rainures inclinées, les parties fléchies coupées par les fines rainures à direction circonférentielle (32) étant adjacentes les unes aux autres le long d'une direction axiale du bandage pneumatique, à l'intérieur du pavé (18).

2. Bandage pneumatique (10) selon la revendication 1, dans lequel les fines rainures à direction circonférentielle (32) sont formées avec une profondeur de rainure inférieure à celle des fines rainures inclinées (20).

3. Bandage pneumatique (10) selon les revendications 1 ou 2, dans lequel les fines rainures à direction circonférentielle (32) sont formées entre les parties fléchies (16A) des rainures à barrettes (16) qui sont adjacentes les unes aux autres dans la direction circonférentielle du bandage pneumatique.

4. Bandage pneumatique (10) selon l'une quelconque des revendications 1 à 3, dans lequel au moins une partie des fines rainures inclinées (20) s'étendent dans une forme en zigzag dans une vue en plan du pavé (18), et sont constituées par des lamelles tridimensionnelles (144) s'étendant en zigzag dans une direction de la profondeur des fines rainures inclinées (20).

5. Bandage pneumatique (10) selon l'une quelconque des revendications 1 à 4, dans lequel au moins une partie d'extrémité des fines rainures à direction circonférentielle (32) comporte une extrémité terminale à l'intérieur du pavé (18).

6. Bandage pneumatique (10) selon l'une quelconque des revendications 1 à 5, dans lequel les rainures à barrettes (16) comprennent un nombre pair de parties fléchies (16A).

7. Bandage pneumatique (10) selon l'une quelconque des revendications 1 à 6, dans lequel :

   les parties fléchies (16A) des rainures à barrettes (16) sont agencées à des intervalles réguliers entre les rainures à direction circonférentielle (14) ; et
   un nombre N des parties fléchies (16A) des rainures à barrettes (16) satisfait l'équation suivante : $W/L \geq N=1$ ;
   dans laquelle W représente une largeur latérale du pavé (18) dans une direction axiale du bandage pneumatique et L représente une largeur circonférentielle du pavé (18) dans la direction circonférentielle du bandage pneumatique.

FIG.1

# FIG.2

PROGRESS DIRECTION

# FIG.3

## FIG.4

# FIG.5

## FIG.6

# FIG.7

# FIG.8

FIG.9

EP 2 910 389 B1

# FIG.10

PROGRESS DIRECTION

TW

# FIG.11

**EP 2 910 389 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011111394 A

- JP 2006151222 A